# EUROPÄISCHE PATENTSCHRIFT

(11) **EP 3 305 970 B1**
(45) Veröffentlichungstag und Bekanntmachung des Hinweises auf die Patenterteilung: **30.01.2019**
(21) Anmeldenummer: 17194664.3
(22) Anmeldetag: 04.10.2017
(51) Int. Cl.: D06F 39/02, A47L 15/44

(54) **DOSIERGERÄT**
METERING DEVICE
APPAREIL DE DOSAGE

(30) Priorität: 06.10.2016 DE 102016118922; 06.10.2016 DE 102016118930; 06.10.2016 DE 102016118946; 18.11.2016 DE 102016122242
(43) Veröffentlichungstag der Anmeldung: 11.04.2018
(73) Patentinhaber: Miele & Cie. KG, 33332 Gütersloh (DE)
(72) Erfinder: Hils, Fabian, 33161 Hövelhof (DE); Wegener, Dirk, 33649 Bielefeld (DE)

(56) Entgegenhaltungen:
- EP-A1- 3 173 006
- CA-A1- 2 844 157
- DE-A1-102013 104 391
- GB-A- 1 204 422

## Beschreibung

Die Erfindung betrifft ein Dosiergerät für das dosierte Einbringen eines schüttfähigen Reinigungsmittels in einen Behandlungsraum eines programmgesteuerten Reinigungsgeräts, insbesondere einer Geschirrspülmaschine, mit einem der Beherbergung des Reinigungsmittels dienenden Vorratsbehälter und einer motorisch verdrehbar gelagerten Trageinheit, die den Vorratsbehälter auswechselbar aufnimmt, wobei der Vorratsbehälter eine Vorratskammer und eine in eine Dosieröffnung mündende Dosierkammer aufweist.

Programmgesteuerte Reinigungsgeräte im Allgemeinen sowie Geschirrspülmaschinen im Speziellen sind aus dem Stand der Technik an sich gut bekannt, weshalb es eines gesonderten druckschriftlichen Nachweises an dieser Stelle nicht bedarf.

Reinigungsgeräte der in Rede stehenden Art verfügen typischerweise über einen Spülbehälter, der einen Behandlungsraum, auch Spülraum genannt, bereitstellt. Dieser Behandlungsraum ist verwenderseitig über eine Beschickungsöffnung zugänglich, die mittels einer verschwenkbar gelagerten Spülraumtür fluiddicht verschließbar ist. Im bestimmungsgemäßen Verwendungsfall dient der Spülbehälter der Aufnahme von zu reinigendem Spülgut, bei dem es sich im Falle einer Geschirrspülmaschine beispielsweise um Geschirr, Besteckteile und/oder dergleichen handeln kann.

Zur Beaufschlagung von zu reinigendem Spülgut mit Spülflüssigkeit, der sogenannten Spülflotte, verfügt das Reinigungsgerät im Inneren des Spülbehälters über eine Sprüheinrichtung. Diese Sprüheinrichtung stellt in aller Regel verdrehbar gelagerte Sprüharme zur Verfügung, wobei typischerweise zwei oder drei solcher Sprüharme vorgesehen sind. Im bestimmungsgemäßen Verwendungsfall erfolgt eine Beaufschlagung des zu reinigenden Spülguts mit Spülflotte mittels sich drehender Sprüharme.

Zur Erzielung eines optimierten Reinigungsergebnisses finden Prozesschemikalien Verwendung, die während eines Reinigungsvorgangs dem Spülraum zugeführt werden, typischerweise als Zugabe zur Spülflotte. Bei solchen Prozesschemikalien handelt es sich beispielsweise um Reinigungsmittel, die dem Spülraum des Reinigungsgeräts programmgesteuert zu einem bestimmten Zeitpunkt des Programmablaufs zugegeben werden.

Aus dem Stand der Technik sind Reinigungsmittel in flüssiger und fester Form bekannt. Dabei können feste Reinigungsmittel in schüttfähiger Pulverform oder als sogenannte Tabs, d. h. in Tablettenform vorliegen. Die Praxis hat indes gezeigt, dass sich mit schüttfähigem Reinigungsmittel in Pulverform die vergleichsweise besten Reinigungsergebnisse erzielen lassen.

Bei der Verwendung von schüttfähigem Reinigungsmittel in Pulverform ist vor jedem Start eines Reinigungsprogramms verwenderseitig von Hand eine Reinigungsmitteldosierung vorzunehmen. Ein Reinigungsgerät verfügt zu diesem Zweck typischerweise türinnenseitig über einen Vorratsbehälter, der mit einer manuell zu bestimmenden Menge an Reinigungsmittel zu bestücken ist. Während eines Programmablaufs öffnet sich dieser Vorratsbehälter zu einem bestimmten Zeitpunkt des Spülprogramms und das vom Vorratsbehälter bevorratete Reinigungsmittel kann von der im Spülraum des Reinigungsgeräts befindlichen Spülflotte ausgeschwemmt werden.

Um eine Reinigungsmittelbevorratung für eine Mehrzahl von Spülprogrammen vornehmen zu können, so dass nicht vor Beginn eines jeden Spülprogramms eine manuelle Reinigungsmitteldosierung stattzufinden hat, sind Dosiergeräte vorgeschlagen worden, so z. B. mit der DE 10 2013 104 391 A1, die ein gattungsgemäßes Dosiergerät betrifft.

Das vorbekannte Dosiergerät verfügt über einen auswechselbar angeordneten Vorratsbehälter, der der Bevorratung von Reinigungsmittel in einer Menge dient, die für eine Mehrzahl von Spülprogrammen ausreichend ist. Der Vorratsbehälter ist um eine Drehachse verdrehbar gelagert, wobei im bestimmungsgemäßen Dosierfall programmgesteuert eine Verdrehbewegung des Vorratsbehälters bewirkt wird. Zu diesem Zweck ist eine motorgetriebene Antriebseinrichtung vorgesehen, mittels welcher im Betriebsfall eine Verdrehbewegung des Vorratsbehälters vorgenommen wird. Die motorgetriebene Antriebseinrichtung wirkt dabei mit einer Trageinheit zusammen, die den Vorratsbehälter auswechselbar aufnimmt.

Zum Zwecke der Reinigungsmittelabgabe verfügt der Vorratsbehälter über eine Dosieröffnung. Über diese wird im Betriebsfall portionsweise Reinigungsmittel abgegeben.

Dabei erfolgt eine solche Reinigungsmittelabgabe in Folge einer Verdrehbewegung des Vorratsbehälters. Je 360°-Umdrehung des Vorratsbehälters wird eine stets gleiche Portionsmenge an Reinigungsmittel der Dosieröffnung zugeführt, und von dort aus unter Zwischenschaltung eines Kanalsystems in den Spülraum des Reinigungsgeräts abgegeben.

Um die Reinigungsmitteldosierung bewerkstelligen zu können, verfügt der Vorratsbehälter über eine Vorratskammer einerseits und eine Dosierkammer andererseits. Dabei dient die Vorratskammer der Bevorratung des Reinigungsmittels und die Dosierkammer besorgt im Verwendungsfall die portionsweise Reinigungsmitteldosierung. Zu diesem Zweck ist die Dosierkammer in zwei strömungstechnisch miteinander verbundene Teilbereiche untergliedert, und zwar einen Dosierraum einerseits und einen Dosierkanal andererseits, die mittels einer Barriere voneinander separiert sind. Die Barriere begrenzt den Dosierraum derart, dass bei einer Verdrehbewegung des Vorratsbehälters zunächst eine Befüllung des Dosierraums mit einer durch die Größe des Dosierraums vorgegebenen Menge an Reinigungsmittel erfolgt. Bei einer weiteren Verdrehbewegung wird die in den Dosierraum eindosierte Menge an Reinigungsmittel an der Barriere vorbei in den Dosierkanal in Richtung der Dosieröffnung geleitet, ohne dass weiteres Reinigungsmittel aus der Vorratskammer in den Dosierraum nachströmt. Im bestimmungsgemäßen Verwendungsfall gelangt das Reinigungsmittel mithin aus der Vorratskammer durch die Durchlassöffnung hindurch in den Dosierraum der Dosierkammer, wobei die Größe des Dosierraums die Menge an portioniertem Reinigungsmittel bestimmt. Infolge einer weiteren Verdrehbewegung des Vorratsbehälters verlässt das portionierte Reinigungsmittel den Dosierraum und gelangt durch den Dosierkanal hindurch zur Dosieröffnung, wobei infolge der weitergeführten Verdrehbewegung des Vorratsbehälters kein Reinigungsmittel mehr aus der Vorratskammer durch die Durchlassöffnung hindurch in den Dosierraum der Dosierkammer nachströmen kann.

Dosiergeräte der vorbeschriebenen Art haben sich im alltäglichen Praxiseinsatz bewährt. Es besteht gleichwohl Verbesserungsbedarf, insbesondere mit Blick auf eine Vereinfachung in der verwenderseitigen Anwendung. Es ist deshalb die **Aufgabe** der Erfindung, ein Dosiergerät der eingangs genannten Art dahingehend weiter zu entwickeln, dass konstruktionsbedingt eine vereinfachte Handhabung durch den Verwender gegeben ist.

Zur **Lösung** dieser Aufgabe wird mit der Erfindung ein Dosiergerät der eingangs genannten Art vorgeschlagen, gemäß dem die Dosierkammer von einem Dosierelement bereitgestellt ist, das innerhalb des Vorratsbehälters bewegbar angeordnet und aus einer Nichtdosierstellung in eine Dosierstellung überführbar ist.

Es hat sich herausgestellt, dass vom Vorratsbehälter bevorratetes Reinigungsmittel infolge eines ungewollten Feuchtigkeitseintrages verklumpen kann, und dies noch vor einer bestimmungsgemäßen Erstingebrauchnahme. Insbesondere eine Verklumpung von sich in der Dosierkammer befindlichem Reinigungsmittel ist von Nachteil, da dies zu einem Zusetzen des Dosierkanals und/oder zu einem Blockieren des Dosierraums mit der Folge führen kann, dass ein ordnungsgemäßes Eindosieren von Reinigungsmittel in den Spülraum des Reinigungsgeräts nicht mehr möglich ist.

Die erfindungsgemäße Ausgestaltung schafft insoweit Abhilfe, denn es ist ein die Dosierkammer bereitstellendes Dosierelement vorgesehen, das innerhalb des Vorratsbehälters bewegbar angeordnet und aus einer Nicht-Dosierstellung in eine Dosierstellung überführbar ist. Nur wenn sich das Dosierelement in der Dosierstellung befindet, kann im bestimmungsgemäßen Verwendungsfall Reinigungsmittel aus der Vorratskammer in die Dosierkammer überführt werden. Andernfalls, wenn sich also das Dosierelement in der Nicht-Dosierstellung befindet, ist ein Überführen von Reinigungsmittel aus der Vorratskammer in die Dosierkammer nicht möglich.

Vor einer Erstingebrauchnahme des Vorratsbehälters befindet sich das Dosierelement in seiner Nicht-Dosierstellung, in welcher die strömungstechnische Verbindung zwischen Vorratskammer und der vom Dosierelement bereitgestellten Dosierkammer unterbrochen ist. Von der Vorratskammer bevorratetes Reinigungsmittel kann mithin nicht in die Dosierkammer überströmen. Sollte es also bei einem sich in Nicht-Dosierstellung befindlichen Dosierelement zu einem ungewollten Feuchtigkeitseintrag kommen, kann es allenfalls zu einer Verklumpung von Reinigungsmittel in der Vorratskammer, nicht aber in der Dosierkammer kommen. Eine etwaige Verklumpung von Reinigungsmittel in der Vorratskammer wiegt indes nicht so schwer wie eine nach dem Stand der Technik mögliche Verklumpung in der Dosierkammer, denn einerseits kommt es bei einer bestimmungsgemäßen Verdrehbewegung des Vorratsbehälters ob der Größe der Vorratskammer zu einem Aufbrechen etwaiger sich dort befindender Verklumpungen und andererseits stellt die Dosierkammer eine Art Labyrinthführung dar, die eher zu ungewollten Reinigungsmittelanhaftungen als die Vorratskammer neigt.

Die Unterbrechung der strömungstechnischen Verbindung zwischen Vorratskammer und Dosierkammer bei einem sich in der Nicht-Dosierstellung befindlichen Dosierelement vor einer Erstingebrauchnahme stellt zudem sicher, dass eine bestimmungsgemäße Portionierung des Reinigungsmittels im Erstingebrauchnahmefall stattfinden kann. Die erfindungsgemäße Ausgestaltung dient insofern auch als Lagerungs- und Transportsicherung, denn es ist wirkungsvoll unterbunden, dass Reinigungsmittel vor einer Erstingebrauchnahme in die Dosierkammer einwandern kann.

Sobald der Vorratsbehälter bestimmungsgemäß in das Dosiergerät zwecks Erstingebrauchnahme eingesetzt wird, kommt es zu einer automatischen Überführung des Dosierelements aus der Nicht-Dosierstellung in die Dosierstellung. In der Dosierstellung ist eine strömungstechnische Verbindung zwischen Vorratskammer und Dosierkammer ausgebildet, so dass im bestimmungsgemäßen Dosierfall von der Vorratskammer beherbergtes Reinigungsmittel in die vom Dosierelement bereitgestellte Dosierkammer überströmen kann.

Sofern der Vorratsbehälter als Einweg-Behälter ausgebildet ist, das heißt eine Wiederbefüllung des Vorratsbehälters nicht vorgesehen ist, kann eine bestimmungsgemäße Rücküberführung des Dosierelements aus einer zuvor eingenommenen Dosierstellung zurück in die Nicht-Dosierstellung nicht vorgenommen werden. Dies deshalb nicht, weil ein Entnehmen des Vorratsbehälters aus dem Dosiergerät bei noch nicht vollständig entleertem Vorratsbehälter nicht vorgesehen ist.

Ist der Vorratsbehälter indes als Mehrwegbehälter ausgebildet, kann also im Bedarfsfall verwenderseitig ein Wiederbefüllen des Vorratsbehälters mit Reinigungsmittel vorgenommen werden, kann das Dosierelement zweckmäßigerweise verwenderseitig aus der zuvor eingenommenen Dosierstellung manuell in die Nicht-Dosierstellung zurückverbracht werden. Nach einer bestimmungsgemäßen Entleerung des Vorratsbehälters kann mithin vor einer Wiederbefüllung des Vorratsbehälters mit Reinigungsmittel das Dosierelement zunächst in seine Ausgangslage, das heißt seine Nicht-Dosierstellung zurückverbracht werden.

Das Dosierelement ist gemäß einem weiteren Merkmal der Erfindung in Höhenrichtung des Vorratsbehälters verfahrbar ausgebildet. Es findet im Betriebsfall mithin eine lineare Verfahrbewegung des Dosierelements statt. Alternativ hierzu kann auch eine Verdrehbewegung des Dosierelements zwecks Überführung aus der Nicht-Dosierstellung in die Dosierstellung vorgesehen sein. Eine lineare Verfahrbewegung ist konstruktiv aber einfacher und in der Umsetzung im Praxisbetrieb weniger störanfällig, weshalb diese Ausführungsvariante bevorzugt ist.

Es ist gemäß einem weiteren Merkmal der Erfindung vorgesehen, dass das Dosierelement eine Eintrittsöffnung aufweist, die in Dosierstellung des Dosierelements mit einer vom Vorratsbehälter bereitgestellten Auslassöffnung zusammenwirkt. Sowohl das Dosierelement als auch der Vorratsbehälter stellen mithin eine Öffnung bereit, die in Dosierstellung des Dosierelements zusammenwirken. In der Dosierstellung liegen die Eintrittsöffnung des Dosierelements und die Auslassöffnung des Vorratsbehälters zumindest abschnittsweise deckungsgleich übereinander, so dass im Dosierfall ein Überströmen von Reinigungsmittel aus der Vorratskammer in die Dosierkammer stattfinden kann. Solange sich das Dosierelement in seiner Nicht-Dosierstellung befindet, ist ein auch zumindest abschnittsweises Überdecken von Eintrittsöffnung und Auslassöffnung nicht gegeben, wobei die die Auslassöffnung des Vorratsbehälters beherbergende Wandung als Verschlusselement für die Eintrittsöffnung des Dosierelements dient, das die strömungstechnische Verbindung zwischen Vorratskammer und Dosierkammer unterbricht.

Gemäß einem weiteren Merkmal der Erfindung ist vorgesehen, dass die Trageinheit ein mit dem Dosierelement zusammenwirkendes Stellmittel aufweist. Dieses Stellmittel dient bei einem bestimmungsgemäßen Einsetzen eines Vorratsbehälters in die Trageinheit dazu, die Dosierkammer aus der Nicht-Dosierstellung in die Dosierstellung zu überführen. Bei dem Stellglied handelt es sich beispielsweise um einen Dorn, der bei einem in die Trageinheit eingesetzten Vorratsbehälter eine vom Vorratsbehälter trageinheitseitig bereitgestellte Öffnung durchgreift. Bei einem bestimmungsgemäßen Einsetzen des Vorratsbehälters in die Trageinheit greift das Stellmittel mithin durch die vorratsbehälterseitig vorgesehenen Öffnungen durch und kommt in Antriebskontakt mit dem Dosierelement. Dieses wird infolge eines Einsetzens des Vorratsbehälters in die Trageinheit in Höhenrichtung des Vorratsbehälters nach oben gedrückt und so aus seiner Nicht-Dosierstellung in die Dosierstellung verfahren.

Um ein möglichst verkantungsfreies Verfahren des Dosierelements sicherzustellen, sind gemäß einem weiteren Merkmal der Erfindung zwei Stellmittel vorgesehen, so dass eine gleichmäßig verteilte Krafteinwirkung auf das Dosierelement stattfinden kann.

Gemäß einem weiteren Merkmal der Erfindung sind Rasteinrichtungen vorgesehen, die das Dosierelement sowohl in seiner Nicht-Dosierstellung als auch in seiner Dosierstellung lagesicher fixieren, so dass ein ungewolltes Überführen des Dosierelements aus der Nicht-Dosierstellung in die Dosierstellung bzw. umgekehrt unterbunden ist. Derartige Rasteinrichtungen können beispielsweise in den Verfahrweg des Dosierelements hineinragende Nocken sein, die nur bei verwenderseitig erhöhtem Kraftaufwand vom Dosierelement passiert werden können.

Mit der Erfindung wird des Weiteren ein Vorratsbehälter zur auswechselbaren Anordnung in einem Dosiergerät mit einem der vorstehend aufgeführten Merkmale vorgeschlagen. Es ergeben sich dabei die ebenfalls schon vorstehend erläuterten Vorteile, auch für einen in solcher Weise ausgebildeten Vorratsbehälter. Dabei kann der Vorratsbehälter entweder wiederbefüllbar, das heißt als Mehrwegbehälter ausgebildet sein oder als Einwegbehälter, wobei in diesem Fall eine verwenderseitige Wiederbefüllung des Vorratsbehälters nicht vorgesehen ist.

Weitere Merkmale und Vorteile der Erfindung ergeben sich aus der nachfolgenden Beschreibung anhand der Figuren. Dabei zeigen:
- Fig. 1: in schematischer Ansicht die Innenseite einer Spülraumtür einer Geschirrspülmaschine;
- Fig. 2: in schematischer Ansicht ausschnittsweise ein Dosiergerät nach der Erfindung;
- Fig. 3: in schematischer Explosionsdarstellung einen Vorratsbehälter nach der Erfindung gemäß einer ersten Ausführungsform;
- Fig. 4: in einer schematischen Ansicht den Vorratsbehälter nach Fig. 3 mit einem Dosierelement in Nicht-Dosierstellung;
- Fig. 5: den Vorratsbehälter nach Fig. 4 mit einem sich in Dosierstellung befindlichen Dosierelement;
- Fig. 6: den Vorratsbehälter nach Fig. 3 in einer rückwärtigen Ansicht;
- Fig. 7: in schematischer Perspektivdarstellung den Vorratsbehälter nach Fig. 3 ausschnittsweise;
- Fig. 8: den Vorratsbehälter nach Fig. 3 in einer geschnittenen Draufsicht;
- Fig. 9: in schematischer Schnittdarstellung das erfindungsgemäße Dosiergerät mit nicht eingesetztem Vorratsbehälter;
- Fig. 10: das Dosiergerät nach Fig. 9 mit eingesetztem Vorratsbehälter;
- Fig. 11: in schematischer Explosionsdarstellung einen erfindungsgemäßen Vorratsbehälter gemäß einer zweiten Ausführungsform;
- Fig. 12: den Vorratsbehälter nach Fig. 11 in einer rückwärtigen Ansicht;
- Fig. 13: den Vorratsbehälter nach Fig. 11 in schematischer Draufsicht von oben; und
- Fig. 14: in schematischer Seitenansicht ein Reinigungsgerät.

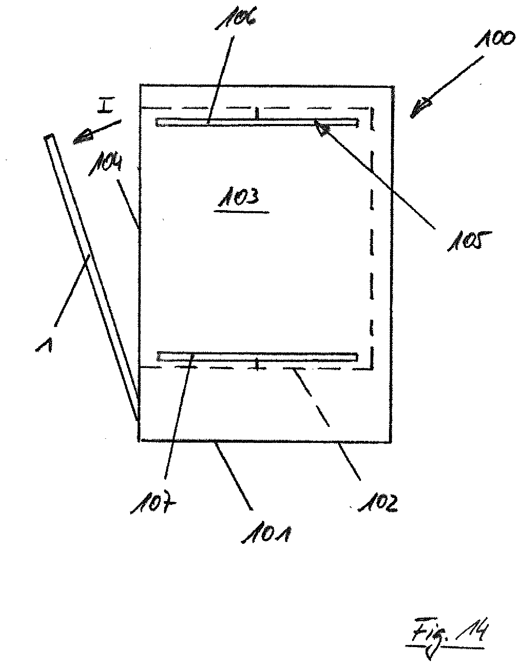

Fig. 14 lässt in rein schematischer Darstellung ein Reinigungsgerät in der Ausgestaltungsform einer Geschirrspülmaschine 100 erkennen.

Die Geschirrspülmaschine 100 verfügt in an sich bekannter Weise über ein Gehäuse 101, das einen Spülbehälter 102 aufnimmt. Der Spülbehälter 102 stellt seinerseits einen Behandlungsraum - auch Spülraum 103 genannt - zur Aufnahme von zu reinigendem Spülgut bereit. Zur Beschickung des Spülraums 103 mit zu reinigendem Spülgut verfügt der Spülbehälter 102 über eine Beschickungsöffnung 104. Diese ist mittels einer Spülraumtür 1 fluiddicht verschließbar, wobei die Spülraumtür 1 um eine horizontal verlaufende Schwenkachse drehverschwenkbar gelagert ist.

Im bestimmungsgemäßen Verwendungsfall erfolgt eine Beaufschlagung des zu reinigenden Spülguts mit Spülflotte, zu welchem Zweck die Geschirrspülmaschine 100 über eine Sprüheinrichtung 105 verfügt. Im gezeigten Ausführungsbeispiel gehören zur Sprüheinrichtung 105 ein oberer Sprüharm 106 sowie ein unterer Sprüharm 107.

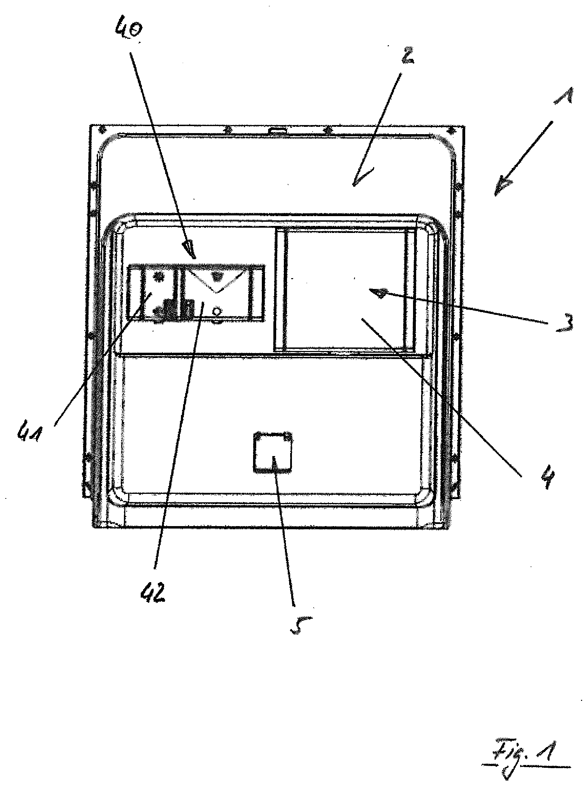

Figur 1 lässt die Spülraumtür 1 in einer Draufsicht erkennen, und zwar die Innenansicht gemäß Blickrichtung I nach Figur 14.

Wie Figur 1 zu entnehmen ist, verfügt die Spülraumtür 1 innenseitig über ein aus dem Stand der Technik an sich bekanntes Kombinationsgerät 40, das einerseits über eine Klarspülmittelbevorratung 41 sowie andererseits über einen Vorratsbehälter 42 verfügt, der je Spülprogramm verwenderseitig manuell mit Reinigungsmittel aufzufüllen ist.

Die Geschirrspülmaschine 100 verfügt neben dem aus dem Stand der Technik an sich bekannten Kombinationsgerät 40 ferner über ein Dosiergerät 3, das ebenso wie das Kombinationsgerät 40 auf der Innenseite 2 der Spülraumtür 1 angeordnet ist. Bei geschlossener Spülraumtür 1 befindet sich die Verschlussklappe 4 des Dosiergeräts 3 in Verschlussstellung, wie dies in Figur 1 gezeigt ist.

Wie dies im Weiteren noch näher beschrieben werden wird, verfügt das Dosiergerät 3 über einen Vorratsbehälter 9, der schüttfähiges Reinigungsmittel beherbergt. Im bestimmungsgemäßen Verwendungsfall gelangt Reinigungsmittel aus dem Vorratsbehälter 9 in den Spülraum 103 der Geschirrspülmachine 100, zu welchem Zweck auf der Innenseite 2 der Spülraumtür 1 ein Dosierauslass 5 vorgesehen ist. Dieser Dosierauslass 5 ist mit einer Abdeckung oder einem verschwenkbar angeordneten Deckel ausgerüstet.

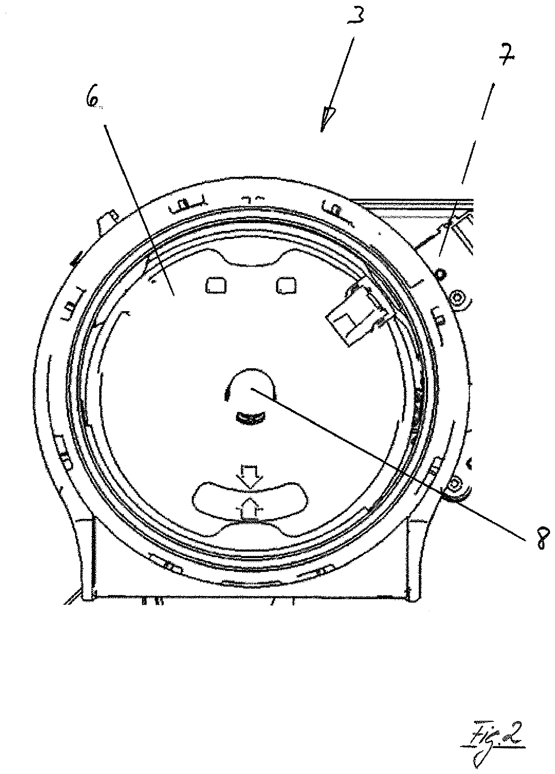

Figur 2 lässt in schematisch perspektivischer Darstellung ausschnittsweise ein Dosiergerät 3 nach der Erfindung erkennen, wobei der besseren Übersicht wegen die Verschlussklappe 4 nicht dargestellt ist.

Wie die Darstellung nach Figur 2 erkennen lässt, verfügt das Dosiergerät 3 über eine Antriebseinrichtung 7. Diese stellt ein nicht näher bezeichnetes Gehäuse sowie eine nicht näher dargestellte Motor-Getriebe-Anordnung bereit. Von der Antriebseinrichtung 7 aufgenommen ist eine Trageinheit 6 vorgesehen. Mittels der Antriebseinrichtung 7 kann die Trageinheit 6 motorisch verdreht werden, und zwar um die durch den Achsfortsatz 8 definierte Drehachse.

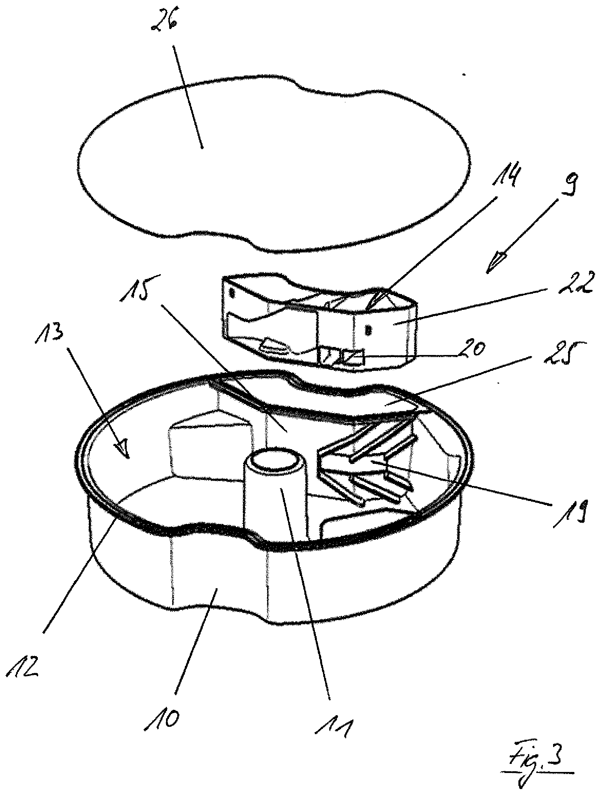

Das Dosiergerät 3 verfügt des Weiteren über einen Vorratsbehälter 9, wie er beispielsweise in Figur 3 dargestellt ist. Der Vorratsbehälter 9 dient der Beherbergung von Reinigungsmittel in einer Menge, die für mehrere Spülprogramme ausreichend ist. Dabei wird je Spülprogramm dem Vorratsbehälter eine portionierte Menge an Reinigungsmittel entnommen und dem Spülraum 103 zugeführt.

Der Vorratsbehälter 9 ist in die Trageinheit 6 des Dosiergerätes 3 verwenderseitig auswechselbar einsetzbar. Die Trageinheit 6 nimmt den Vorratsbehälter 9 verdrehfest auf, so dass bei einer motorgetriebenen Verdrehbewegung der Trageinheit 6 auch der davon aufgenommene Vorratsbehälter 9 mit verdreht, und zwar um die durch den Achsfortsatz 8 definierte Drehachse.

Wie eine Zusammenschau der Figuren 3 bis 6 ergibt, verfügt der Vorratsbehälter 9 über einen Grundkörper 10. Dieser Grundkörper 10 ist mit einem Dom 11 ausgerüstet, der bei einem in die Trageinheit 6 eingesetzten Vorratsbehälter 9 den von der Trageinheit 6 bereitgestellten Achsfortsatz aufnimmt, was eine positionsgenaue Ausrichtung des Vorratsbehälters 9 relativ gegenüber der Trageinheit 6 gewährleistet.

Der Grundkörper 10 stellt ferner eine umlaufende Randkante 12 bereit, die eine Folie 26 zum oberseitigen Verschluss des Vorratsbehälters 9 trägt. Bevorzugterweise ist die Folie 26 auf die Randkante 12 des Grundkörpers randseitig aufgeschweißt .

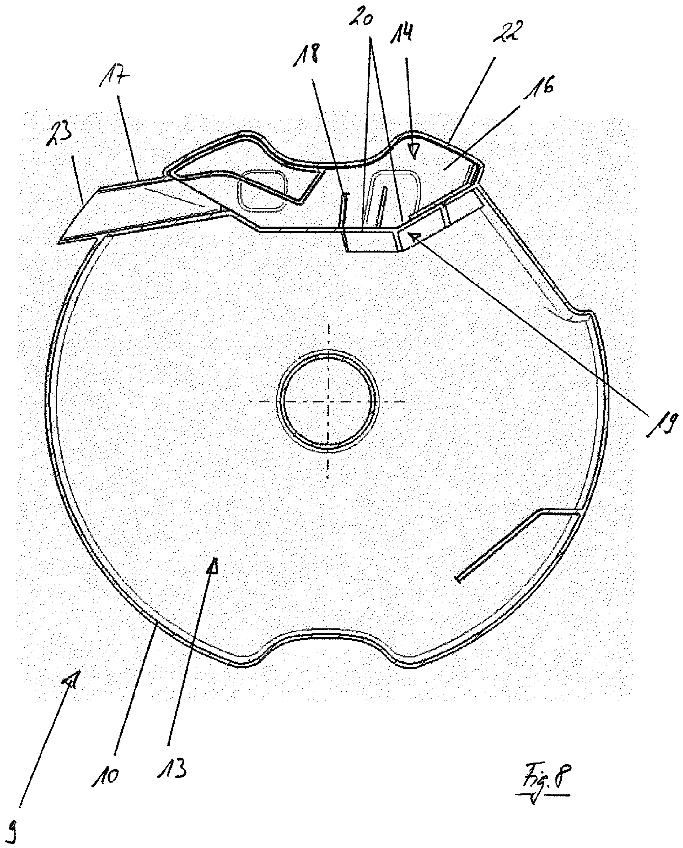

Der Grundkörper 10 des Vorratsbehälters 9 stellt eine Vorratskammer 13 einerseits sowie ein davon mittels einer Trennwand 15 separiertes Kompartment 25 bereit. Dabei dient die Vorratskammer 13 der eigentlichen Bevorratung von Reinigungsmittel. Das Kompartment 25 dient indes der Aufnahme eines Dosierelements 22, das seinerseits eine Dosierkammer 14 bereitstellt, welche Dosierkammer 14 dazu dient, Reinigungsmittel im bestimmungsgemäßen Betriebsfall portionsweise abzugeben. Wie insbesondere die Schnittdarstellung nach Fig. 8 erkennen lässt, stellt die Dosierkammer 14 einen sog. Dosierraum bereit, der mittels einer Dosierbarriere 18 verengt ist, so dass eine insgesamt labyrinthförmige Ausbildung der Dosierkammer 14 entsteht, die im Betriebsfall für die Portionierung des in den Behandlungsraum abzugebenden Reinigungsmittels sorgt.

An die Dosierkammer 14 schließt sich strömungstechnisch ein im gezeigten Ausführungsbeispiel vom Vorratsbehälter 9 bereitgestellter Dosierkanal 17 an, der in die Dosieröffnung 23 mündet. Von der Vorratskammer 13 abgegebenes Reinigungsmittel kann mithin durch die Dosierkammer 14 hindurch zum Dosierkanal 17 strömen und über die Dosieröffnung 23 in Richtung des Behandlungsraums der Geschirrspülmaschine abgegeben werden.

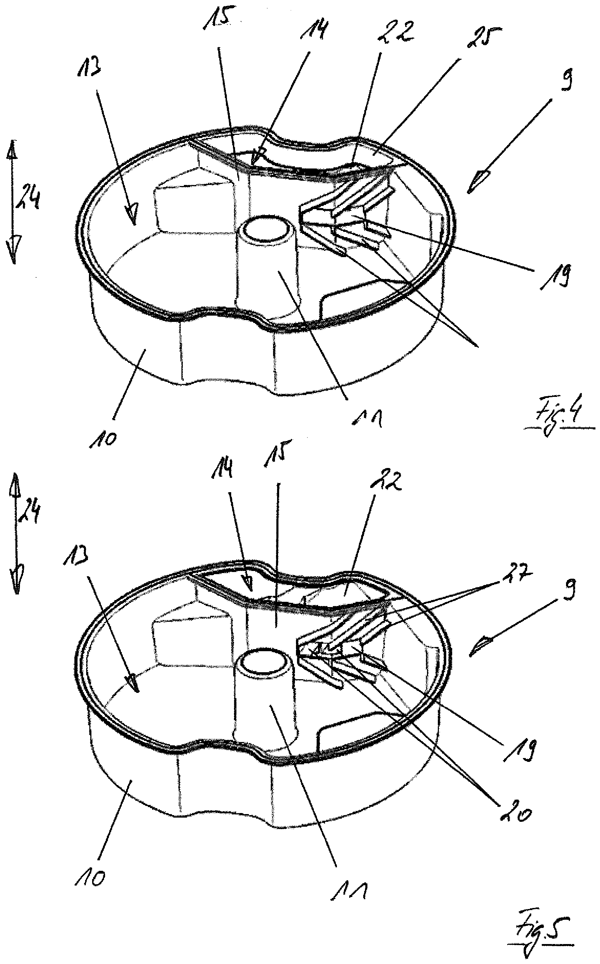

Wie sich insbesondere aus einer Zusammenschau der Figuren 4 und 5 ergibt, kann das vom Kompartment 25 aufgenommene und die Dosierkammer 14 bereitstellende Dosierelement 22 in Relation zum Grundkörper 10 des Vorratsbehälters 9 zwei Stellungen einnehmen. Dabei ist ein Verfahren des Dosierelements 22 in Höhenrichtung 24 möglich.

Fig. 4 zeigt das Dosierelement 22 in seiner Nicht-Dosierstellung. Fig. 5 lässt indes ein in Höhenrichtung 24 nach oben verfahrenes Dosierelement 22 erkennen, das sich in dieser Stellung in seiner Dosierstellung befindet.

Zwecks Überführung von Reinigungsmittel aus der Vorratskammer 13 in die Dosierkammer 14 verfügt der Grundkörper 10 des Vorratsbehälters 9 über eine Auslassöffnung 19. Diese ist zwecks verbesserter Reinigungsmittelüberführung in die Dosierkammer 14 von trichterförmig angeordneten Rippen 27 umgeben.

Korrespondierend zur Auslassöffnung 19 ist das Dosierelement 22 im gezeigten Ausführungsbeispiel mit zwei Einlassöffnungen 20 ausgestattet. Dabei kommen die Einlassöffnungen 22 in Überdeckung mit der Auslassöffnung 19, wenn sich das Dosierelement 22 in seiner Dosierstellung befindet, wie in Fig. 5 gezeigt. In der Nicht-Dosierstellung gemäß Fig. 4 kommen die Einlassöffnungen 20 in Höhenrichtung 24 unterhalb der Auslassöffnung 19 zu liegen, so dass sie mittels der als Verschlusselement dienenden Trennwand 15 zwischen Vorratskammer 13 und Kompartment 25 verschlossen sind.

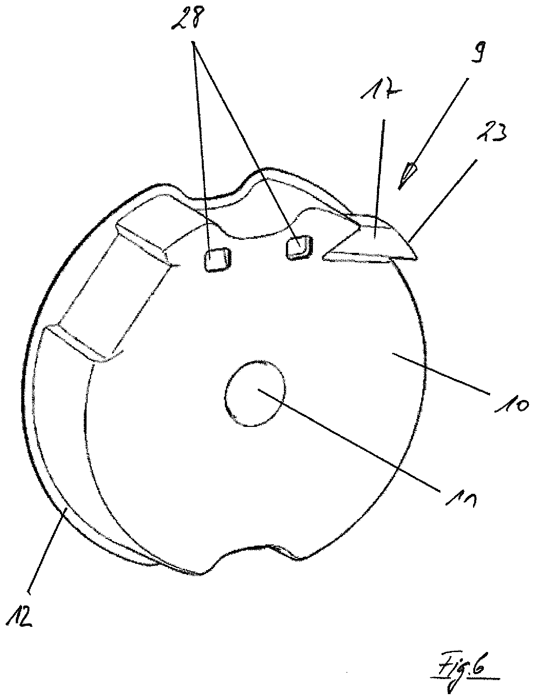

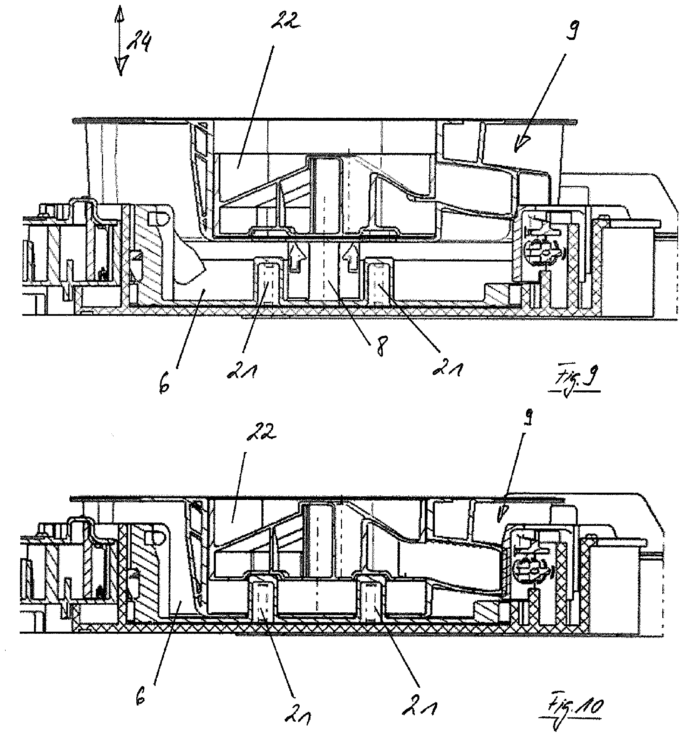

Zur automatischen Überführung des Dosierelements 22 aus der Nicht-Dosierstellung gemäß Fig. 4 in die Dosierstellung gemäß Fig. 5 bei einem bestimmungsgemäßen Ersteinsetzen des Vorratsbehälters 9 in die Trageinheit 7 dienen trageinheitseitig vorgesehene Stellmittel 21, die im gezeigten Ausführungsbeispiel als Dorne ausgebildet sind, wie dies insbesondere die Figuren 9 und 10 erkennen lassen. Diese Stellmittel 21 greifen im bestimmungsgemäßen Verwendungsfall in bodenseitig des Grundkörpers 10 des Vorratsbehälters 9 ausgebildete Öffnungen 28 ein, wie sie am deutlichsten in Fig. 6 zu erkennen sind.

Die Schnittdarstellung nach Fig. 9 lässt das Dosiergerät 3 mit noch nicht eingesetztem Vorratsbehälter 9 erkennen. In dieser Stellung des Vorratsbehälters 9 befindet sich das Dosierelement 22 noch in seiner Nicht-Dosierstellung. Sobald nun der Vorratsbehälter 9 bestimmungsgemäß in Höhenrichtung 24 nach unten in die Trageinheit 6 des Dosiergeräts 3 eingesetzt wird, greifen die als Dorne ausgebildeten Stellmittel 21 des Dosiergeräts 3 durch die vorratsbehälterseitigen Öffnungen 28 hindurch, wodurch sie in Berührungskontakt mit dem Dosierelement 22 kommen. Wird nun der Vorratsbehälter 9 in Höhenrichtung 24 weiter nach unten verfahren und bestimmungsgemäß in die Trageinheit 6 eingesetzt, so wird das vom Kompartment 25 beherbergte Dosierelement 22 in Höhenrichtung 24 nach oben getrieben, das heißt verfahren, so dass das Dosierelement 22 bei ordnungsgemäß in das Dosiergerät 3 eingesetztem Vorratsbehälter 9 in seine Dosierstellung gemäß Fig. 5 verbracht ist, wie dies auch die Darstellung nach Fig. 10 erkennen lässt.

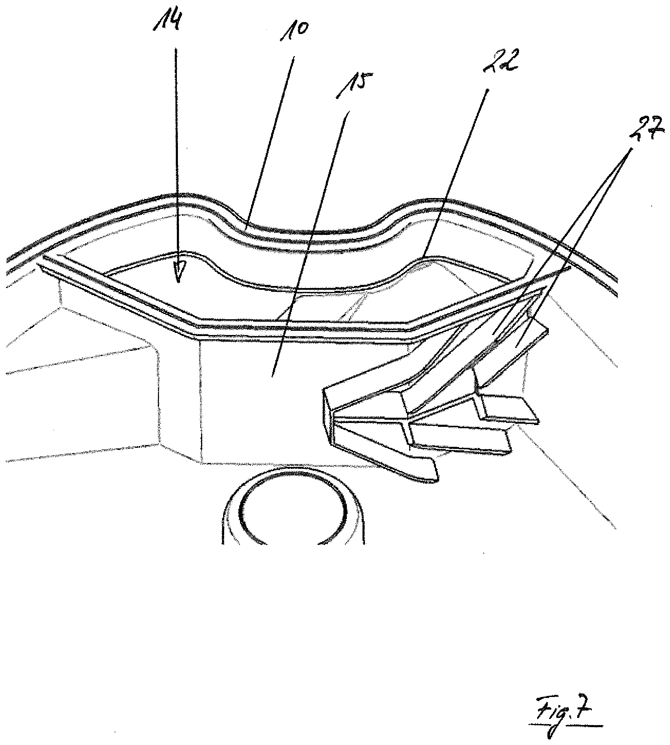

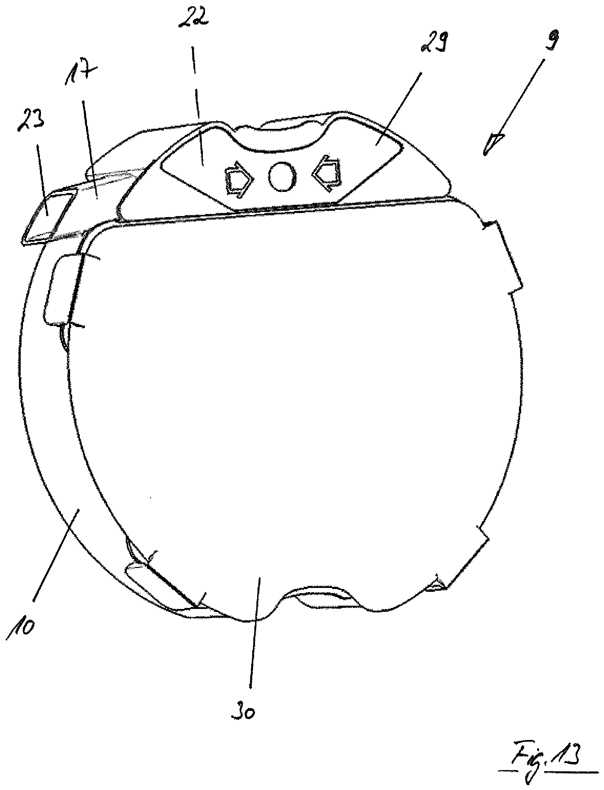

Der in den Figuren 3 bis 10 gezeigte Vorratsbehälter ist als Einwegbehälter konzipiert, das heißt eine verwenderseitige Wiederbefüllung mit Reinigungsmittel ist nicht möglich. Eine hierzu alternative Ausführungsform lassen die Figuren 1 bis 13 erkennen, die einen Mehrwegvorratsbehälter zeigen, der verwenderseitig wiederbefüllt werden kann.

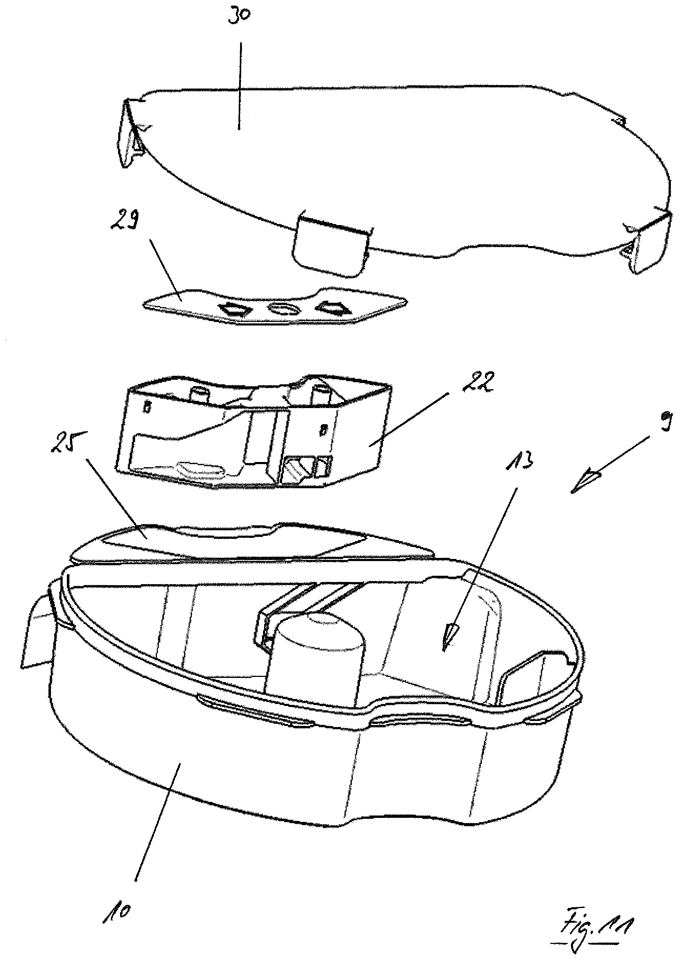

Der Vorratsbehälter nach der Ausführungsform gemäß der Figuren 11 bis 13 verfügt nicht über eine aufgeschweißte Folie 26, sondern über einen Verschlussdeckel 30, der verwenderseitig vom Grundkörper 10 des Vorratsbehälters 9 zwecks Zugriff auf die Vorratskammer 13 entfernt werden kann. Bei entferntem Deckel 30 ist also eine Wiederauffüllung des Vorratsbehälters mit Reinigungsmittel möglich. Nach erfolgter Befüllung ist der Deckel 30 auf den Grundkörper 10 zwecks Verschluss des Vorratsbehälters 9 wieder aufzusetzen.

Da es im Unterschied zur vorerläuterten Ausführungsform an einer auch das Dosierelement 22 abdeckenden Folie 26 fehlt, ist zum Verschluss des Dosierelements 22 ein separater Deckel 29 vorgesehen. Auch dieser lässt sich verwenderseitig abnehmen, so dass im Bedarfsfall eine Reinigung des Dosierelements 22 vorgenommen werden kann.

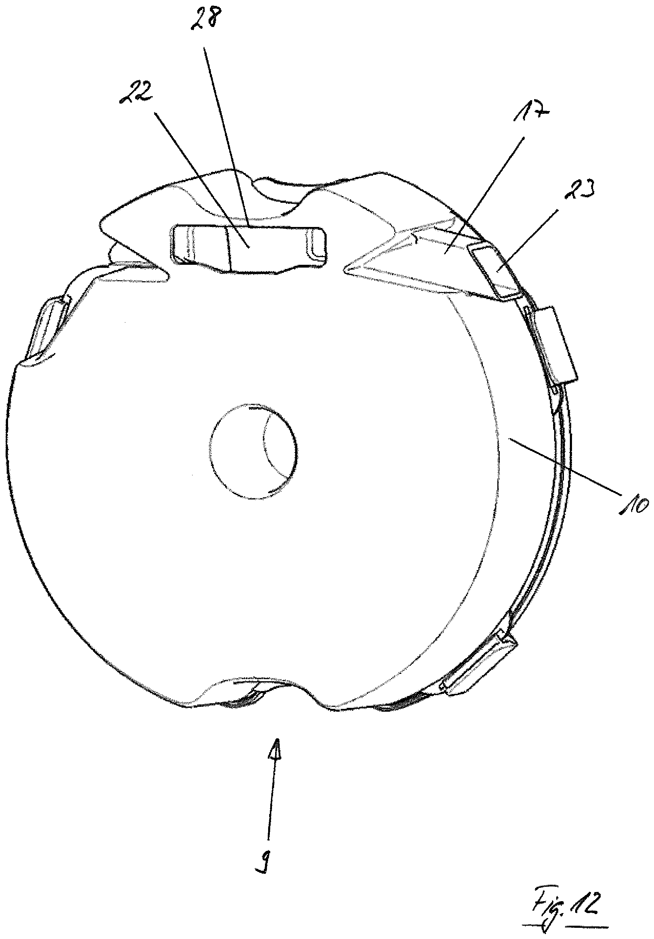

Die mit den trageinheitseitig vorgesehenen Stellmitteln 21 zusammenwirkende Öffnung 28 ist bei der alternativen Ausführungsform vergleichsweise groß ausgebildet, wie dies die rückwärtige Ansicht nach Fig. 12 erkennen lässt. Dabei weist die Öffnung 28 bevorzugterweise eine solche Größe auf, dass sie von einem Finger eines Verwenders oder mittels eines Hilfsmittels durchgriffen werden kann, um das Dosierelement 22 nach oben aus dem Kompartment 25 herausdrücken zu können. Es ist so gestattet, das Dosierelement insbesondere zwecks manueller Reinigung dem Vorratsbehälter 9 zu entnehmen.

### Bezugszeichen

- 1: Spülraumtür
- 2: Innenseite
- 3: Dosiergerät
- 4: Verschlussklappe
- 5: Dosierauslass
- 6: Trageinheit
- 7: Antriebseinrichtung
- 8: Achsfortsatz
- 9: Vorratsbehälter
- 10: Grundkörper
- 11: Dom
- 12: Randkante
- 13: Vorratskammer
- 14: Dosierkammer
- 15: Trennwand
- 16: Dosierraum
- 17: Dosierkanal
- 18: Dosierbarriere
- 19: Auslassöffnung
- 20: Einlassöffnung
- 21: Stellmittel
- 22: Dosierelement
- 23: Dosieröffnung
- 24: Höhenrichtung
- 25: Kompartment
- 26: Folie
- 27: Rippe
- 28: Öffnung
- 29: Deckel
- 30: Deckel
- 40: Kombinationsgerät
- 41: Klarspülmittelbevorratung
- 42: Vorratsbehälter
- 100: Geschirrspülmaschine
- 101: Gehäuse
- 102: Spülbehälter
- 103: Spülraum
- 104: Beschickungsöffnung
- 105: Sprüheinrichtung
- 106: Sprüharm
- 107: Sprüharm

## Patentansprüche

1. Dosiergerät für das dosierte Einbringen eines schüttfähigen Reinigungsmittels in einen Behandlungsraum (103) eines programmgesteuerten Reinigungsgeräts (100), insbesondere einer Geschirrspülmaschine, mit einem der Beherbergung des Reinigungsmittels dienenden Vorratsbehälter (9) und einer motorisch verdrehbar gelagerten Trageinheit (6), die den Vorratsbehälter (9) auswechselbar aufnimmt, wobei der Vorratsbehälter (9) eine Vorratskammer (13) und eine in eine Dosieröffnung (23) mündende Dosierkammer (14) aufweist, wobei die Dosierkammer (14) von einem Dosierelement (22) bereitgestellt ist, **dadurch gekennzeichnet, dass** das Dosierelement (22) innerhalb des Vorratsbehälters (9) bewegbar angeordnet und aus einer Nicht-Dosierstellung in eine Dosierstellung, in der Reinigungsmittel von der Vorratskammer (13) in die Dosierkammer überströmen kann, überführbar ist, wobei von der Vorratskammer (13) abgegebenes Reinigungsmittel durch die Dosierkammer (14) hindurch strömen und über die Dosieröffnung (23) in Richtung des Behandlungsraums (103) des Reinigungsgeräts (100) abgegeben werden kann.

2. Dosiergerät nach Anspruch 1,
**dadurch gekennzeichnet,**
**dass** das Dosierelement (22) in Höhenrichtung (24) des Vorratsbehälters (9) verfahrbar ausgebildet ist.

3. Dosiergerät nach Anspruch 1 oder 2,
**dadurch gekennzeichnet,**
**dass** das Dosierelement (22) eine Einlassöffnung (20) ausweist, die in Dosierstellung des Dosierelements (22) mit einer vom Vorratsbehälter (9) bereitgestellten Auslassöffnung (19) zusammenwirkt.

4. Dosiergerät nach einem der vorhergehenden Ansprüche,
**dadurch gekennzeichnet,**
**dass** die Trageinheit (6) ein mit dem Dosierelement (22) zusammenwirkendes Stellmittel (21) ausweist.

5. Dosiergerät nach Anspruch 4,
**dadurch gekennzeichnet,**
**dass** das Stellmittel (21) ein Dorn ist, der bei einem in die Trageinheit (6) eingesetzten Vorratsbehälter (9) eine vom Vorratsbehälter (9) trageinheitseitig bereitgestellte Öffnung (28) durchragt.

6. Dosiergerät nach Anspruch 4 oder 5,
**gekennzeichnet durch**
ein zweites mit dem Dosierelement (22) zusammenwirkendes Stellmittel (21).

7. Dosiergerät nach einem der vorhergehenden Ansprüche,
**dadurch gekennzeichnet,**
**dass** das Dosierelement (22) oberseitig mittels eines abnehmbaren Deckels (29) verschlossen ausgebildet ist.

8. Vorratsbehälter zur auswechselbaren Anordnung in einem Dosiergerät (3) nach einem der vorhergehenden Ansprüche 1 bis 7.

9. Vorratsbehälter nach Anspruch 8, **dadurch gekennzeichnet,**
**dass** dieser als Mehrwegbehälter ausgebildet ist.

10. Vorratsbehälter nach Anspruch 8,
**dadurch gekennzeichnet,**
**dass** dieser als Einwegbehälter ausgebildet ist.

## Claims

1. Metering device for metered introduction of a bulk cleaning agent into a processing chamber (103) of a program-controlled cleaning appliance (100), in particular a dishwasher, comprising a storage container (9) intended for accommodating the cleaning agent and a supporting unit (6) which is mounted so as to be rotatable in a motorised manner and exchangeably receives the storage container (9), the storage container (9) comprising a storage chamber (13) and a metering chamber (14) that opens into a metering opening (23), the metering chamber (14) being provided by a metering element (22), **characterised in that** the metering element (22) is arranged so as to be movable inside the storage container (9) and is transferable from a non-metering position into a metering position, in which cleaning agent can flow over from the storage chamber (13) into the metering chamber, it being possible for cleaning agent dispensed from the storage chamber (13) to flow through the metering chamber (14) and to be dispensed via the metering opening (23) towards the processing chamber (103) of the cleaning appliance (100).

2. Metering device according to claim 1, **characterised in that** the metering element (22) is designed to be movable in the vertical direction (24) of the storage container (9).

3. Metering device according to either claim 1 or claim 2, **characterised in that** the metering element (22) comprises an inlet opening (20) which, when the metering element (22) is in the metering position, interacts with an outlet opening (19) provided by the storage container (9).

4. Metering device according to any of the preceding claims, **characterised in that** the supporting unit (6) comprises an actuating means (21) which interacts with the metering element (22).

5. Metering device according to claim 4, **characterised in that** the actuating means (21) is a pin which, when a storage container (9) is inserted into the supporting unit (6), projects through an opening (28) provided by the storage container (9) on the supporting-unit side.

6. Metering device according to either claim 4 or claim 5, **characterised by** a second actuating means (21) which interacts with the metering element (22).

7. Metering device according to any of the preceding claims, **characterised in that** the metering element (22) is closed at the top by means of a removable lid (29).

8. Storage container for exchangeable arrangement in a metering device (3) according to any of the preceding claims 1 to 7.

9. Storage container according to claim 8, **characterised in that** said storage container is designed as a reusable container.

10. Storage container according to claim 8, **characterised in that** said storage container is designed as a single-use container.

## Revendications

1. Dispositif de dosage pour l'introduction dosée d'un détergent en vrac dans une chambre de traitement (103) d'un appareil de nettoyage commandé par programme (100), en particulier d'un lave-vaisselle, comprenant un récipient de stockage (9) servant à la réception du détergent et une unité de support (6), montée de manière à pouvoir être tournée par un moteur, qui reçoit le récipient de stockage (9) de manière interchangeable, le récipient de stockage (9) comprenant une chambre de stockage (13) et une chambre de dosage (14) débouchant dans une ouverture de dosage (23), la chambre de dosage (14) étant fournie par un élément de dosage (22) **caractérisé en ce que** l'élément de dosage (22) est disposé de manière mobile à l'intérieur du récipient de stockage (9) et qu'il peut être déplacé d'une position de non-dosage à une position de dosage, où le détergent peut couler de la chambre de stockage (13) dans la chambre de dosage, le détergent déchargé de la chambre de stockage (13) pouvant s'écouler à travers la chambre de dosage (14) et être déchargé par l'ouverture de dosage (23) en direction de la chambre de traitement (103) de l'appareil de nettoyage (100).

2. Dispositif de dosage selon la revendication 1, **caractérisé en ce que** l'élément de dosage (22) est conçu de manière à pouvoir être déplacé dans la direction de la hauteur (24) du récipient de stockage (9).

3. Dispositif de dosage selon la revendication 1 ou 2, **caractérisé en ce que** l'élément de dosage (22) comprend une ouverture d'admission (20) qui, dans une position de dosage de l'élément de dosage (22), coopère avec une ouverture de sortie (19) fournie par le récipient de stockage (9).

4. Dispositif de dosage selon l'une quelconque des revendications précédentes, **caractérisé en ce que** l'unité de support (6) comprend un moyen de réglage (21) coopérant avec l'élément de dosage (22).

5. Dispositif de dosage selon la revendication 4, **caractérisé en ce que** le moyen de réglage (21) est un mandrin qui, dans le cas d'un récipient de stockage (9) inséré dans l'unité de support (6), traverse une ouverture (28) fournie du côté de l'unité de support par le récipient de stockage (9).

6. Dispositif de dosage selon la revendication 4 ou 5 **caractérisé par** un deuxième moyen de réglage (21) coopérant avec l'élément de dosage (22).

7. Dispositif de dosage selon l'une quelconque des revendications précédentes, **caractérisé en ce que** l'élément de dosage (22) est conçu fermé sur le côté supérieur par un couvercle amovible (29).

8. Récipient de stockage pour la disposition interchangeable dans un dispositif de dosage (3) selon l'une quelconque des revendications 1 à 7 précédentes.

9. Récipient de stockage selon la revendication 8, **caractérisé en ce qu'**il est conçu comme récipient réutilisable.

10. Récipient de stockage selon la revendication 8, **caractérisé en ce qu'**il est conçu comme récipient jetable.
